(19) **Europäisches Patentamt**

**European Patent Office**

**Office européen des brevets**

(11) **EP 0 572 769 B1**

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(51) Int. Cl.[6]: **A62D 3/00**, B09B 3/00,
C04B 18/10, C04B 7/26,
C10B 53/00, C22B 7/02,
C22B 7/04

(21) Anmeldenummer: **93104418.4**

(22) Anmeldetag: **18.03.1993**

(54) **Verfahren zur Aufbereitung von Kehrichtverbrennungsrückständen zu einem umweltverträglichen und für Bauzwecke verwendbaren Produkt**

Process for the conversion of waste incineration residues to a non-polluting product and useful for constructional purposes

Procédé pour la conversion des résidus de l'incinération de déchets en produit non-polluant et utilisable pour la construction

(84) Benannte Vertragsstaaten:
**AT BE CH DE DK ES FR GB GR IE IT LI LU MC NL PT SE**

(30) Priorität: **12.05.1992 CH 151992**

(43) Veröffentlichungstag der Anmeldung:
**08.12.1993 Patentblatt 1993/49**

(73) Patentinhaber:
**HOLDERBANK FINANCIERE GLARUS AG
CH-8750 Glarus (CH)**

(72) Erfinder:
• **Edlinger, Alfred
CH-5400 Baden (CH)**
• **Rey, Theo, Dr.
CH-5000 Aarau (CH)**

(74) Vertreter:
**EGLI-EUROPEAN PATENT ATTORNEYS
Horneggstrasse 4
Postfach 473
8034 Zürich (CH)**

(56) Entgegenhaltungen:
**EP-A- 0 437 679       EP-A- 0 453 904
WO-A-91/02824       DE-A- 1 508 003
DE-A- 3 207 203       DE-A- 3 608 005
DE-A- 3 934 611       US-A- 3 779 182**

• **J.J.J.M. GOUMANS, H.A. VAN DER SLOOT, TH.G. AALBERS 'Waste Materials in Construction; Proceedings of the International Conference on Environmental Implications of Construction with Waste Materials' 1991 , ELSEVIER , AMSTERDAM, NL F.J.M.Lamers et al. 'Production and Application of Useful Slag from Inorganic Waste Products with a Smelting Process' pages 513-522 * Seite 514, Absatz 2.1 - Seite 516, Absatz 2.4 ***

**Beschreibung**

Die Erfindung betrifft ein Verfahren zur Aufbereitung von grösstenteils anorganischen, mit Schwermetallen und/oder Schwermetallverbindungen belasteten Kehrichtverbrennungsprodukten und/oder Analoga davon zu umweltverträglichen Produkten gemäß dem Oberbegriff des Anspruches 1.

Die erwähnten Kehrichtverbrennungsprodukte, deren Aufbereitung nach dem erfindungsgemässen Verfahren vorgenommen werden kann, sind beispielsweise Rostabwurf, Rostdurchfall, Rostschlacke, Rückstand der Rauchgasreinigung und/oder analoge Rückstände aus der Kehrichtverbrennung.

In diesem Zusammenhang wird darauf hingewiesen, dass im vorliegenden das Wort "Kehricht" in der gleichen Bedeutung verwendet wird wie das Wort "Müll", dass in Teilen des deutschen Sprachraumes anstelle des Wortes "Kehricht" gebräuchlich ist.

Die erwähnten Analoga, deren Aufbereitung nach dem erfindungsgemässen Verfahren vorgenommen werden kann, sind beispielsweise Schlacken, Altlasten, Altkatalysatoren, Giessereisande, Schrottmetalle usw., deren chemische Zusammensetzung und Eigenschaften in bezug auf deren Gefährlichkeit für die Umwelt denen von Kehrichtverbrennungsprodukten ähnlich sind.

Ein Verfahren der eingangs genannten Art ist aus dem Aufsatz von F.J.M. Lamers et al. "Production and Application of a Useful Slag from Inorganic Waste Products with a Smelting Process" bekannt, welcher in "Waste Materials in Construction" (Proceedings of the International Conference on Environmental Implications of Construction with Waste Materials, Maastricht NL, 10-14 Nov. 1991, herausgegeben von Goumans, van der Sloot und Aalbers) veröffentlicht wurde.

Dieses Verfahren ist allerdings nur auf Flugasche anwendbar. Zur Erzeugung einer Schlacke mit brauchbaren puzzolanischen oder hydraulischen Reaktionseigenschaften ist es nötig, Kalkstein und gegebenenfalls Tonerde oder eine andere Aluminiumoxid enthaltende Verbindung beizugeben, weil die Flugasche eine für die Erzeugung der gewünschten Reaktionseigenschaften zu hohe Proportion von Siliciumdioxid und/oder Silicaten enthält. Andererseits stellt sich mit Flugasche ein besonderes Problem nicht, das bei schwereren Kehrichtverbrennungsprodukten wie beispielsweise Rostabwurf und Rostdurchfall auftritt, nämlich, dass solche Kehrichtverbrennungsprodukte noch immer ansehnliche Mengen (beispielsweise bis zu 5 Gew.-%) von nur teilweise oder gar nicht verbrannten organischen Abfallstoffen enthalten. Dieses aus dem Aufsatz von Lamers bekannte Verfahren löst also das Problem der Entsorgung von Kehrichtverbrennungsprodukten nur unvollständig.

Im Hinblick auf die vollständige Verbrennung der Kehrichtverbrennungsprodukte kann die beispielsweise aus WO-91/02824 bekannte Oxidation von geschmolzenen metallurgischen Abfallprodukten durch Einblasen von sauerstoffhaltigem Gas in die Schmelze durch ein Lanze in Betracht gezogen werden. Bei diesem Verfahren herrschen jedoch im Bad stets reduzierende Bedingungen mit Ausnahme der Umgebung der Lanze. Dieses Verfahren erfüllt den Zweck, flüchtige Elemente und deren Verbindungen in einer Gasphase entweichen zu lassen und sie anschliessend daraus abzuscheiden und/oder auszuwaschen, andere Elemente und deren Verbindungen werden hingegen in der Schlacke gesammelt und machen diese giftig oder zumindest nicht akzeptabel im Sinne der Vorschriften, auf die weiter unten eingegangen wird.

Die Entsorgung von Kehrichtverbrennungsprodukten und/oder Analoga bereitet in allen Industrieländern grösste Sorge. Die Kehrichtverbrennungsprodukte können giftige Gase und Eluate erzeugen, ganz sicher giftig sind die Produkte aus der Verbrennung von Sondermüll. Während ein steigendes Volumen von giftigen Produkten anfällt, wird es immer schwieriger, das anfallende Volumen von giftigen Produkten in geeigneten Deponien zu lagern. Das Problem stellt sich vor allem bei der Entsorgung von hochtoxischen, Schwefel- und/oder Halogenverbindungen enthaltenden Substanzen.

Bei einer typischen Kehrichtverbrennungsanlage einer mittelgrossen Stadt wie Zürich sind jährlich etwa 300000 bis 400000 Tonnen Kehricht zu verbrennen, wobei aus 1000 kg Kehricht etwa 350 kg Kehrichtverbrennuungsprodukte entstehen, die ihrerseits ca. 300 kg Rostabwurf, ca. 40 kg Filterstäube und ca. 10 kg Produkte der weitergehenden Rauchgasreinigung umfassen. Bisher wurde diese Schlacke mit einfachen mechanischen Mitteln so gut wie möglich entschrottet, von grob-organischen Substanzen befreit und, gegebenenfalls nach einer Fraktionierung und/oder einer Stabilisierung mit Zement, im Strassenbau eingesetzt. Es fallen aber mehr Kehrichtverbrennungsprodukte an, als im Strassenbau entsorgt werden kann. Davon abgesehen ist die erwähnte Art der Entsorgung der Kehrichtverbrennungsprodukte bezüglich der Umweltbelastung nicht unbedenklich.

Die seit kurzem in der Schweiz geltende "Technische Verordnung über Abfälle" schliesst die Verwendung von Kehrichtverbrennungsrückständen als Baustoff grundsätzlich aus, Ausnahmen sind für Bauzwecke im Zusammenhang mit dem Bau von Strassen, Plätzen und Dämmen nur mit Einschränkungen zugelassen und dieser Einsatz der Kehrichtverbrennungsrückstände muss in einer Art Altlasten-Kataster registriert werden.

Als Baustoff verwendbare Kehrichtverbrennungsrückstände müssen dabei eine sogenannte Erdkrusten- oder Gesteinsqualität aufweisen, bei welcher die Umweltbelastung wesentlich unterhalb der von der "Technischen Verordnung über Abfälle" definierten Umweltbelastung liegt.

Die Entgiftung des Ausstosses von Kehrichtverbrennungsanlagen (Kehrichtverbrennungsprodukte in Form von Feststoffen und Gasen) ist bereits Gegenstand verschiedener Vorschläge.

Aus DE-C-3608005 ist bekannt, zur Entsorgung von Sondermüll, der toxische oder umweltschädliche Bestandteile enthält oder bei der Pyrolyse oder Verbrennung entstehen lässt, den Müll zunächst bei 500-900°C zu pyrolysieren. Die dabei entstehenden Gase werden anschliessend zusammen mit einem Oxidationsmittel wie Luft oder Wasserdampf durch eine auf 1400-1600°C gehaltene Schmelze von Eisen oder auch Stahl, Kupfer, Metalloxid oder Salz geleitet. Nickel, Kupfer und Arsen lösen sich in der Eisenschmelze als Elemente oder Verbindungen, Mangan und Chrom sammeln sich oxidiert in der geschmolzenen Schlacke. Schwermetalle, die bei der Temperatur des Bades einen hohen Dampfdruck haben, beispielsweise Blei, Zink, Cadmium, Quecksilber, sowie Schwefel- und/oder Halogenverbindungen entweichen mit den Gasen, die dann so gereinigt werden, so dass sie neben Inertgasen hauptsächlich Wasserstoff und Kohlenmonoxid enthalten und als Brennstoff verwendbar sind. Das ganze Verfahren kann dadurch weitgehend ohne Energiezufuhr betrieben werden. Die übrigbleibenden toxischen Bestandteile werden in der Schlacke stark fixiert, so dass diese in Deponien ohne höhere Sicherheitsanforderungen, aber doch nur in Deponien gelagert werden kann, während eine anderweitige Verwendung der Schlacke wegen ihrer toxischen Bestandteile nicht in Betracht kommt. Bei diesem bekannten Verfahren sind es aber die Gase aus der Pyrolyse des Sondermülls, die einer Behandlung unterzogen werden, während keine Behandlung für giftige Schlacke aus einer herkömmlichen Kehrichtverbrennungsanlage vorgeschlagen wird.

Aus EP-C-175207 ist bekannt, zur Entsorgung von kohlenstoffhaltigem oder organischem Sondermüll diesen in eine heisse Flüssigkeit wie ein eisenhaltiges Metallbad mit einer Temperatur von über 1000°C einzubringen und ein Oxidationsgas zuzugeben, um den Müll im heissen Bad zu oxidieren. Nach ihrer Entgiftung enthalten die entstehenden Gase neben Inertgasen hauptsächlich Wasserstoff und Kohlenmonoxid. Dieses bekannte Verfahren ist auf die vollständige Vernichtung von gefährlichen organischen Stoffen wie Dioxin gerichtet, während im Hinblick auf die Beseitigung von Metall oder Schlacke, welche toxische Bestandteile enthalten, kein Hinweis gegeben wird. Aus diesem Verfahren ist bekannt, den Kehricht in Kontakt mit einem Eisenbad zu bringen, aber bei diesem bekannten Verfahren ist es der Sondermüll selbst, der direkt einer Behandlung unterzogen wird, während keine Behandlung für giftige Schlacke aus einer herkömmlichen Kehrichtverbrennungsanlage vorgeschlagen wird.

Aus JP-A-54-78866 ist bekannt, zur Entsorgung von Sondermüll diesen in die Schlacke eines-Konverters einzubringen, und Kohlestaub oder Altöl sowie ein Oxidationsgas zuzugeben, um den Müll im heissen Bad zu oxidieren und die übrigbleibende Asche in der geschmolzenen Schlacke aufzunehmen. Die entstehenden Gase enthalten neben Inertgasen hauptsächlich Wasserstoff und Kohlenmonoxid. Die geschmolzene Schlacke wird unter reduzierenden Bedingungen gehalten, so dass Eisen, Calcium und Phosphor aus der Schlacke entfernt und darunter als Legierungsschmelze abgeschieden werden. Diese Legierungsschmelze wird getrennt in eine eisenhaltige Fraktion und eine Fraktion, welche Oxide von Calcium und Phosphor enthält. Die eisenhaltige Fraktion ist bei der Stahlherstellung und die calciumphosphathaltige Fraktion als Dünger brauchbar, während die Schlacke rezykliert wird. Auch dieses bekannte Verfahren ist auf die vollständige Vernichtung von gefährlichen organischen Stoffen gerichtet, während im Hinblick auf die Beseitigung von Metall oder Schlacke, welche toxische Bestandteile enthalten, kein Hinweis gegeben wird. Aus diesem Verfahren ist es bekannt, den Kehricht in Kontakt mit einem Eisenbad zu bringen, aber bei diesem bekannten Verfahren ist es der Sondermüll selbst, der direkt einer Behandlung unterzogen wird, während keine Behandlung für giftige Schlacke aus einer herkömmlichen Kehrichtverbrennungsanlage vorgeschlagen wird.

Aus EP-C-162215 ist bekannt, Schlacke aus der Müllverbrennung zusammen mit Klinker bei der Herstellung von Zement zu verwenden. Der Müll wird in heisser Abluft aus der Kühlung des Zementklinkers verbrannt. In den dabei entstehenden 1000-1400°C heissen Gasen wird das Zementrohmehl calciniert, wobei ein Teil dieser Gase am Einlauf des Klinkerdrehrohrofens abgezogen wird, um die flüchtigen Schwermetalle daraus zu kondensieren und entfernen. Die Schlacke aus der Müllverbrennung wird in Wasser abgeschreckt, sie hat latenthydraulische Eigenschaften und kann dem Zement beigemischt werden. Bei diesem Verfahren ist aber nicht sichergestellt, dass alle toxischen Bestandteile aus der Schlacke entfernt worden sind, so dass diese Schlacke dem Zement nicht ohne weiteres bei einer beliebigen Anwendung beigemischt werden darf. Bei diesem bekannten Verfahren wird also die Schlacke aus einer herkömmlichen Kehrichtverbrennungsanlage ohne Rücksicht auf ihre Umweltverträglichkeit weiterverarbeitet, es wird aber keine Behandlung für giftige Schlacke aus einer herkömmlichen Kehrichtverbrennungsanlage vorgeschlagen.

Aus BE-A-868430 ist bekannt, basische Schlacke aus der Sauerstoff-Behandlung von Gusseisen zu Portlandzement zu reduzieren. Der flüssigen Schlacke wird Aluminiumoxid und Siliciumdioxid zugesetzt und die Atmosphäre wird hochreduzierend gemacht, um Eisenoxid und Manganoxid in der Schlacke zu reduzieren und flüssiges manganhaltiges Eisen unter der flüssigen Schlacke abzuscheiden. Nach der Reduktion wird der Schlacke Kalk zugesetzt, um die Zusammensetzung der flüssigen Schlacke auf diejenige von Portlandzement einzustellen. Auch bei diesem Verfahren ist aber nicht sichergestellt, dass alle toxischen Bestandteile aus der Schlacke entfernt worden sind, so dass diese Schlacke dem Zement nicht ohne weiteres bei einer beliebigen Anwendung beigemischt werden darf. Bei diesem bekannten Verfahren wird also keine Behandlung für giftige Schlacke aus einer herkömmlichen Kehrichtverbrennungsanlage vorgeschlagen.

Gesamthaft betrachtet ist das Ziel der eben erwähnten bekannten Verfahren, Kehrichtverbrennungsrückstände zu produzieren, die in Form eines auslaugbeständigen Glasgranulats vorliegen, welche dann in einer Deponie gelagert werden.

Ein Verfahren zur Aufbereitung von als Feststoff vorliegenden Kehrichtverbrennungsprodukten zu umweltverträglichen und für Bauzwecke unbedenklich verwendbaren Produkten, die eine Erdkrusten- oder Gesteinsqualität aufweisen, wie diese in der "Technischen Verordnung über Abfälle" strikt definiert ist, ist also noch nicht bekannt.

Aufgabe der Erfindung ist es daher, ein Verfahren zur Aufbereitung von grösstenteils anorganischen, mit Schwermetallen und/oder Schwermetallverbindungen belasteten Kehrichtverbrennungsprodukten und/oder Analoga davon vorzuschlagen, bei dem die sich in einer Schlacke sammelnden Stoffe zu einem umweltverträglichen Produkt mit latenthydraulischen und/oder puzzolanischen Eigenschaften aufbereitet werden, wobei dieses umweltverträgliche Produkt als hochwertiges mineralisches Bindemittel beispielsweise für Mischzemente verwendbar ist und beispielsweise dem Zement und/oder Beton ohne weiteres bei einer beliebigen Anwendung zugesetzt werden kann und auch darf, weil es einen auch gemäss der Schweizer "Technischen Verordnung über Abfälle" für die Umwelt unbedenklichen Rohstoff für Bauzwecke und/oder Baustoff ergibt.

Zur Lösung dieser Aufgabe wird ein Verfahren der eingangs erwähnten Art erfindungsgemäss dadurch gekennzeichnet, dass beim Reduktionsschritt als Reduktionsmittel metallisches Eigen verwendet wird.

Beim Oxidationsschritt kann der Gehalt der im Reaktor enthaltenen Schmelze an Eisen durch Beigabe von Eisen oder einer Eisenverbindung eingestellt werden. Zumindest am Ende der Oxidation kann die Temperatur der im Reaktor enthaltenen Schmelze oberhalb 1450°C und vorzugsweise bei etwa 1500°C gehalten werden.

Bei dem auf den Oxidationsschritt folgenden Reduktionsschritt kann auch Eisenoxid zumindest teilweise zu Metall übergeführt werden, und es können dem Reaktor Extraktionsmittel zur gesteuert fraktionierten Extraktion einzelner Metalle und zur Sedimentation eines die Schwermetallschmelze(n) unter der Eisenschmelze schichtweise enthaltenden Metallbades eingegeben werden, wobei das Metallbad fraktioniert dem Reaktor entnommen werden kann. Bei diesem Reduktionsschritt kann die Reduktion mittels Eisen, dieses vorzugsweise in Form von Schrott, und/oder mittels einer Teilfraktion des Kehrichtverbrennungsproduktes erfolgen, und anschliessend kann eine reduzierende Nachbehandlung mittels Beigabe von Aluminium und/oder Calcium und/oder Ferrosilicium vorgenommen werden.

Die Abschreckung der Schlackenschmelze kann durch Wärmeaustausch mit einem Fluid, vorzugsweise mit Wasser, Wasserdampf, Luft und/oder Sauerstoff erfolgen und das bei diesem Wärmeaustausch erhitzte Fluid zur Vorwärmung von noch nicht geschmolzenen Kehrichtverbrennungsprodukten und/oder Analoga verwendet werden, wobei zur genannten Abschreckung vorzugsweise ein bereits zur genannten Vorwärmung verwendetes Fluid verwendet werden kann.

Grundsätzlich können zur Durchführung des Oxidationsschritts verschiedene Oxidationsmittel wie beispielsweise Sauerstoff, Luft, Wasserdampf, Kohlendioxid oder auch eine oxidierend eingestellte Brennerflamme und dergleichen verwendet werden. Im Prinzip könnten auch gewisse oxidische Feststoffe verwendet werden.

Mit dem erfindungsgemässen Verfahren werden die Kehrichtverbrennungsprodukte und/oder Analoga schmelzthermisch unter solchen Redox-Bedingungen behandelt, dass sie unter Schadstoff-Abreicherung (Schwermetalle, Eisen, Chloride, Sulfate, Organika) latenthydraulische und/oder puzzolanische Eigenschaften bekommen.

Das erfindungsgemässe Verfahren führt dank seinen Verfahrensschritten der kontrollierten Oxidation und der anschliessenden kontrollierten Reduktion von Schwermetallverbindungen und zumindest teilweise von Eisen zu den folgenden Vorteilen:

- Das erfindungsgemässe Verfahren ist auf allerlei Ausgangsstoffe wie verschiedene Schlacken, Altlasten, Altkatalysatoren, Giessereisande, Schrottmetalle usw. anwendbar;
- Anstelle von Produkten, die in Deponien zu lagern sind, werden marktgängige Produkte produziert, nämlich einerseits ein mineralisches Bindemittel von tiefem Schadstoffgehalt, das beispielsweise für Mischzemente verwendbar ist, andererseits mindestens eine an Schwermetallen hochangereicherte Metallegierung, in der die anfänglich in den Kehrichtverbrennungsprodukten und/oder Analoga enthaltenen Metalle, unter anderem Eisen, Kupfer, Nickel, enthalten sind, und aus der sich wertvolle Metalle rückgewinnen lassen;
- Die Oxidation der im Reaktor enthaltenen Schmelze und die Folgereaktionen wie beispielsweise die Reaktion von Metalloxiden mit Silicaten erzeugt Wärme, die zur Erhitzung beiträgt und somit den rein thermischen Energiebedarf zu optimieren hilft;
- Aus der Anlage entweichen keine wesentlichen Mengen anderer Gase als diejenigen, die in der Luft vorkommen.

Nachstehend werden Ausbildungen der Erfindung anhand der Zeichnung näher beschrieben. Es zeigen:

Fig. 1  ein Flussdiagramm zur schematischen Veranschaulichung des erfindungsgemässen Verfahrens, und
Fig. 2  eine schematische Darstellung eines Konverters bei der Ausübung eines Verfahrensschritts des erfindungsgemässen Verfahrens, im Längsschnitt.

Ein hier als Beispiel gegebenes Ausgangsprodukt für die Durchführung des erfindungsgemässen Verfahrens ist ein Kehrichtverbrennungsprodukt, wie es beispielsweise am Rost einer Kehrichtverbrennungsanlage bei 600-900°C anfällt. Lässt man dieses Produkt von alleine abkuhlen, so hat es keine latenthydraulischen und/oder puzzolanischen Eigenschaften und es ist meist auch nicht homogen, insbesondere weil es Schrotteisen enthält. Üblicherweise wird aber das heisse Kehrichtverbrennungsprodukt durch Austrag in Wasser auf etwa 80°C gekühlt und in einem Bunker zwischengelagert, wo es sich gegebenenfalls weiter abkühlt. Die Feuchte dieses gekühlten Kehrichtverbrennungsprodukts beträgt beim Austragen etwa 25 % Wasser und kann sich im Laufe der Zeit bei der Zwischenlagerung im Bunker auf 15-20 % Wasser reduzieren.

Ein typisches Kehrichtverbrennungsprodukt, wie es am Rost einer Kehrichtverbrennungsanlage anfällt, enthält etwa 10 Gew.-% metallisches Eisen und etwa 5 Gew.-% metallisches Aluminium. Nachdem man erkennbare metallische Bestandteile wie Eisen- und Aluminiumstücke daraus entfernt hat, ist die Zusammensetzung des so erhaltenen Kehrichtverbrennungsrückstands beispielsweise etwa wie folgt:

| | | | |
|---|---|---|---|
| $SiO_2$ | 48,6 Gew.-% | Cd | 5,7 ppm |
| $Al_2O_3$ | 10,0 Gew.-% | Hg | 0,1 ppm |
| $Fe_2O_3$ | 5,5 Gew.-% | Tl | < 1,0 ppm |
| CaO | 17,0 Gew.-% | Ni | 131 ppm |
| MgO | 2,8 Gew.-% | Cr | 450 ppm |
| $SO_3$ | 1,6 Gew.-% | Cu | 1285 ppm |
| $K_2O$ | 1,2 Gew.-% | Pb | 2334 ppm |
| $TiO_2$ | 1,0 Gew.-% | Sn | 197 ppm |
| $Mn_2O_3$ | 0,1 Gew.-% | Zn | 3025 ppm |
| $P_2O_5$ | 0,6 Gew.-% | | |
| Cl | 0,3 Gew.-% | | |
| F | 0,1 Gew.-% | | |
| Glühverlust | 7,9 Gew.-% | | |
| Varia q.s.100 | 3,3 Gew.-% | | |
| | | | |
| C organisch | 0,5 Gew.-% | | |
| $CO_2$ anorganisch | 1,2 Gew.-% | | |
| pH-Wert | 11,3 | | |

Im Vergleich dazu bestimmt die "Technische Verordnung über Abfälle", dass unter anderem folgende Werte einzuhalten sind: Cd < 50 ppm, Cu, Pb, Ni < 500 ppm, Zn < 1000 ppm.

Der hohe Glühverlust der obigen Kehrichtverbrennungsrückstandsfraktion ist vorwiegend bedingt durch die aus Wasser (Feuchte) entstehenden Hydroxide, was durch den hohen pH-Wert von über 11 bestätigt wird. Die Konzentration von Kupfer, Blei und Zink überschreitet den von der "Technischen Verordnung über Abfälle" festgelegten Grenzwert.

Die Grundidee des erfindungsgemässen Verfahrens besteht darin, das Redox-Verhalten des Kehrichtverbrennungsrückstands einerseits mittels eines Oxidationsmittels, andererseits mittels eines Reduktionsmittels zu steuern. Dies führt zu einer nennenswerten Verminderung des Gehalts an Schwermetallverbindungen in der aufbereiteten Schlacke. Im optimalen Fall ist keine Zufuhr von thermischer Energie nötig. Wenn Sauerstoff zur Oxidation verwendet wird, entweichen aus der Anlage keine wesentlichen Gasmengen.

In einer ersten Phase wird der Kehrichtverbrennungsrückstand oxidiert. Im Laufe der Temperaturerhöhung schmilzt bei etwa 1000°C das Feststoffgemisch allmählich. Das in der so entstandenen Schmelze enthaltene metallische Eisen wird dabei zunächst zu Hämatit oxidiert:

5

$$4\,Fe + 3\,O_2 \rightarrow 2\,Fe_2O_3$$

1 Tonne Kehrichtverbrennungsrückstand (100 kg metallisches Eisen) erfordert also etwa 43 Kg (30 m$^3$) reinen Sauerstoff oder 150 m$^3$ Luft.

Hämatit zerfällt bei Erhöhung der Temperatur zu Magnetit und Sauerstoff:

$$6\,Fe_2O_3 \rightarrow 4\,Fe_3O_4 + O_2$$

Bei einer Schmelzbadtemperatur oberhalb etwa 1300°C zerfällt Magnetit zu Wüstit und Sauerstoff:

$$2\,Fe_3O_4 \rightarrow 6\,FeO + O_2$$

Bei geeigneter Prozessführung unter Ausführung dieser Reaktionen in Kaskade ist Sauerstoff rezyklierbar, und es ergibt sich folgende Gesamtreaktion:

$$2\,Fe + O_2 \rightarrow 2\,FeO$$

1 Tonne Schmelze (100 kg metallisches Eisen) erfordert dann nur noch etwa 29 Kg (20 m$^3$) reinen Sauerstoff oder 100 m$^3$ Luft.

In einer zweiten Phase werden die nun entstandenen Schwermetalloxidverbindungen insbesondere von Cu, Cd, Ni, Pb in der Schmelze entsprechend ihrer freien Reaktionsenthalpie reduziert:

$$Cuo + Fe \rightarrow Cu + FeO$$

$$CdO + Fe \rightarrow Cd + FeO$$

$$NiO + Fe \rightarrow Ni + FeO$$

$$PbO + Fe \rightarrow Pb + FeO$$

Das gebildete FeO reagiert sofort exotherm mit dem Silicat in der Schmelze unter Bildung von Fayalit (diese Reaktion gilt übrigens auch für die Oxidations-Sequenz):

$$2\,FeO + SiO_2 \rightarrow Fe_2SiO_4$$

Ausgehend von einem maximalen Gehalt von 2500 ppm Cu, 12 ppm Cd, 200 ppm Ni und 5000 ppm Pb in der Schmelze ergibt sich für 1 Tonne Schmelze ein Bedarf von 140 g (1,5 m$^3$) Wasserstoff.

Die spezifische Wärmekapazität der Schmelze beträgt etwa 1.5 kJ/kg/K, wobei mögliche exotherme Reaktionen nicht bewerden. Die Verdampfungsenthalpie von Wasser beträgt etwa 2700 kJ/Kg. Die Schmelze enthält etwa 10 Gew.-% metallisches Eisen, das bei 1500°C zu Wüstit oxidiert, wobei die entsprechende Verbrennungsenthalpie 6400 kJ/kg beträgt, sowie etwa 5 Gew.-% metallisches Aluminium mit einer Verbrennungsenthalpie von 42000 kJ/kg. Das Wärmeangebot ergibt sich aus der Verbrennung dieser Metalle sowie des unverbrannten Kohlenstoffes. Wird als Ausgangsprodukt der Kehrichtverbrennungsrückstand verwendet, der am Rost der Kehrichtverbrennungsanlage anfällt, ergibt sich ein bedeutender Wärmeüberschuss. Unter diesen Umständen wird keine Energie für reine Heizungszwecke benötigt.

Während der Vorwärmung und Erhitzung der Schmelze bis zur Oxidationstemperatur verdampfen Anteile der Metalle Hg, Zn, Cd, Pb, Sn bzw. deren flüchtige Verbindungen sehr schnell. Die verbleibenden Schwermetallverbindungen werden in der Schmelze reduziert. Flüchtige Metalle, beispielsweise Zn und Pb, entweichen in der Gasphase. Die übrigen geschmolzenen reduzierten Metalle, beispielsweise Ni, Cu und Eisen, sind in der geschmolzenen Schlacke nicht löslich, so dass die einzelnen geschmolzenen Metalle oder deren geschmolzenen Legierungen ohne weiteres durch Sedimentation von der Schlackenschmelze trennbar sind.

Diese Sedimentation kann zudem durch Beigabe von Extraktionsmitteln ("Sammlern") zur geschmolzenen Schlacke gefördert werden. In der geschmolzenen Schlacke fallen nämlich die entstehenden reduzierten Metalle als fein-disperse Metalltröpfchen an, deren Aggregation eine gewisse Zeit braucht. In Gegenwart von gewissen flüssigen Metallphasen, in denen die beim Reduktionsschritt entstehenden Metalle leicht lösbar sind, wird die erwünschte Aggregation der fein-dispersen Metalltröpfchen dadurch beschleunigt, dass die genannten Metallphasen sozusagen eine flüssig/flüssig-Extraktion bewirken. Ein geeignetes Extraktionsmittel ist beispielsweise metallisches Blei für die Aggregation und Legierung von beim Reduktionsschritt entstehenden Kupfer, Nickel, und Zinn oder Eisen für die Aggregation

EP 0 572 769 B1

von beim Reduktionsschritt entstehenden Kupfer, Nickel und Zinn.

Ausserdem erlaubt die auf Basis der Redoxpotentiale gesteuerte Beigabe solcher Extraktionsmittel, die beim Reduktionsschritt entstehenden Metalle nacheinander in der geschmolzenen Schlacke entstehen zu lassen, so dass sie fraktioniert in flüssigen Metallphasen gewonnen werden können.

Es ist noch zu erwähnen, dass ein hoher Gehalt an Chromoxid in der geschmolzenen Schlacke beispielsweise über eine totale Reduktion der Eisenoxide zu Eisen gesenkt werden kann, denn Chromoxid wird in der geschmolzenen Schlacke erst nach den Eisenoxiden reduziert.

Eine weitere Möglichkeit, Chrom aus der Schlacke zu entfernen, besteht darin, während des Oxidationsschrittes auch Chlor in der Reaktor einzuführen. Aus zumindest einem Teil des Chroms werden leichtflüchtige Chromchloride gebildet, die in die Gasphase über der Schlacke entweichen. Das benötigte Chlor kann in Form von Chlorgas oder Chloriden oder noch von chlorierten Verbindungen, insbesondere von chlorierten Lösungsmitteln wie beispielsweise Trichlorethylen, in den Reaktor eingeführt werden.

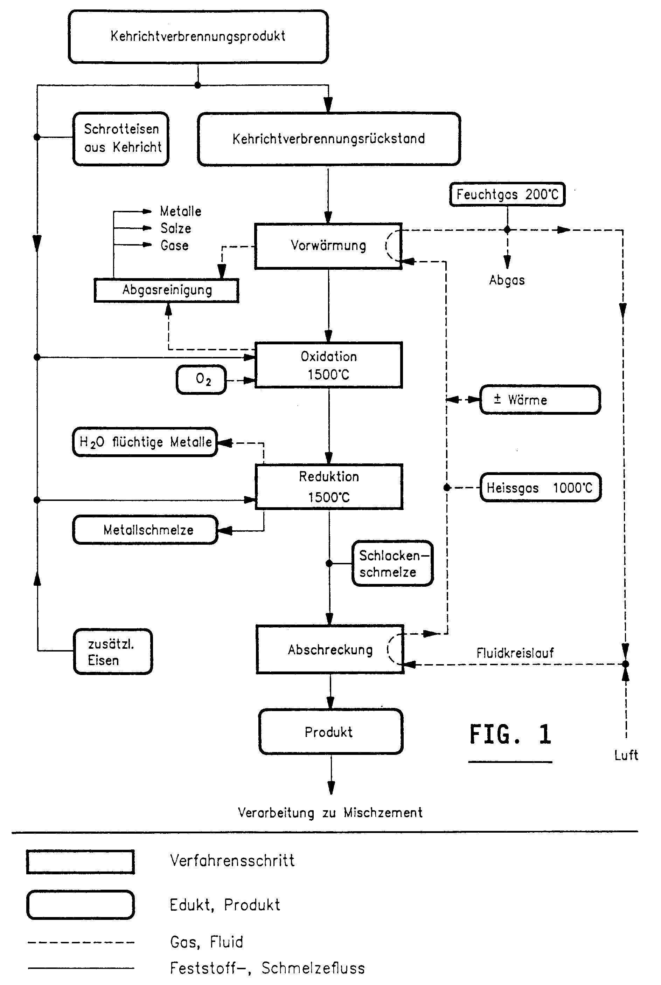

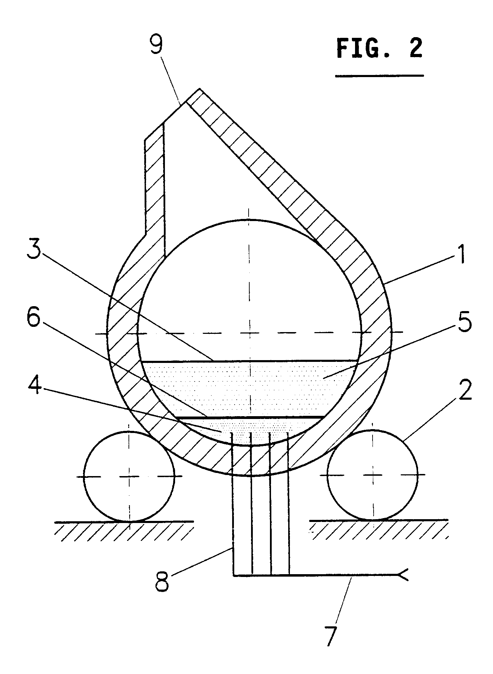

Die nachstehend beschriebene Folge von Verfahrensschritten ist im Flussdiagramm der Fig. 1 schematisch veranschaulicht. Dabei ist in Fig. 2 als Beispiel eines zum Ausüben des Verfahrens geeigneten Reaktors ein mit elektrischem Lichtbogen geheizter Konverter des in der Stahlindustrie verwendeten Typs dargestellt. Dieser Konverter ist, wie weiter unter näher beschrieben wird, in Fig. 2 in einer Position dargestellt, bei der ein Gas in die Schmelze eingeblasen werden kann.

Am Anfang des Verfahrens wird das anfallende Kehrichtverbrennungsprodukt einer herkömmlichen Kehrichtverbrennungsanlage in Kehrichtverbrennungsrückstand und grobes Schrotteisen fraktioniert. Dieser Verfahrensschritt kann gegebenenfalls schon in der Kehrichtverbrennungsanlage vorgenommen werden.

Beim so erhaltenen Kehrichtverbrennungsrückstand kann es sich um einen von alleine abgekühlten und dann relativ trocknen Rückstand oder um einen mit Wasser auf etwa 80°C gekühlten und in einem Bunker zwischengelagerten und dann relativ feuchten Rückstand handeln. Dieser Kehrichtverbrennungsrückstand wird in einen geeigneten Reaktor eingegeben, beispielsweise in den erwähnten, mit elektrischem Lichtbogen heizbaren Konverter.

Das vom Kehrichtverbrennungsrückstand getrennte grobe Schrotteisen wird zur Durchführung der weiter unten beschriebenen Verfahrensschritte verwendet. Falls die aus dem Kehricht stammende Menge Schrotteisen nicht von sich aus dazu genügt, kann zusätzliches Eisen beispielsweise in Form von Schrott, Stahl, Gusseisen, Legierung usw. und/oder eine Eisenverbindung in Form von einem oder mehreren Eisenoxiden dem Kehrichtverbrennungsrückstand und/oder der Schmelze im Reaktor beigegeben werden, um beim weiter unten beschriebenen Reduktionsschritt ein geeignetes geschmolzenes Eisenbad zu bilden.

In einem dem Reaktor vorgeschalteten Vorwärmer wird der eingegebene Kehrichtverbrennungsrückstand zwecks Energierückgewinnung vorgewärmt. Die dazu benötigte Wärme wird nämlich zumindest teilweise durch Wärmeaustausch zwischen einem Fluid wie beispielsweise Wasser, Luft und/oder Wasserdampf und dem Endprodukt des Verfahrens bei dessen Abschreckung (die weiter unten beschrieben wird) gewonnen, denn nach diesem Wärmeaustausch hat das dazu verwendete Fluid eine Temperatur von beispielsweise etwa 1000°C. Je nach der gesamten Wärmebilanz des Verfahrens kann diesem heissen Fluid thermische Überschussenergie entnommen oder geliefert werden, um dadurch die benötigten Temperaturverhältnisse aufrechtzuerhalten, was in Fig. 1 mit dem Kästchen " ± Wärme " angedeutet ist. Die Abgase aus dieser Vorwärmung des Kehrichtverbrennungsrückstands sind feucht und treten beispielsweise bei etwa 200°C aus, sie sind nicht giftig und können zur Atmosphäre entlassen werden, soweit sie nicht beispielsweise dazu gebraucht werden, beim schon erwähnten letzten Schritt des Verfahrens die Schmelze abzuschrecken. Der betreffende Fluidkreislauf ist in Fig. 1 schematisch dargestellt.

Beim nächsten Verfahrensschritt wird die Schmelze oxidiert, und zwar soweit, dass zumindest das gesamte Eisen oxidiert wird. Als Oxidationsmittel wird Sauerstoff verwendet, es könnten aber wie bereits erwähnt auch andere Oxidationsmittel verwendet werden. Der Sauerstoff wird beispielsweise in den Konverter von unten her durch Rohre eingeblasen, wie es in Stahlhütten bekannt ist. Bei dieser Oxidation entwickelt sich die Verbrennungsenthalpie des Eisens und des Aluminiums, was den Inhalt des Reaktors allmählich auf beispielsweise etwa 1500°C aufheizt und schmelzen lässt. Dieser Verfahrensschritt ist auch insofern von wirtschaftlichem Vorteil, als die an sich kostspielige vollständige Beseitigung des Eisens aus dem Kehricht entfällt. Im übrigen wirken die geschmolzenen Eisenoxide als Flussmittel auf gleiche Weise wie beispielsweise CaO, was die Viskosität der geschmolzenen Schlacke auf günstige Weise vermindert. Die Temperatur dieses Verfahrensschritts liegt vorzugsweise oberhalb 1300°C, weil darunter die Viskosität der geschmolzenen Schmelze zu hoch wäre. Bevorzugt werden zumindest am Ende der Oxidation Temperaturen oberhalb 1450°C, wie beispielsweise die im vorangehenden angegebene Temperatur von etwa 1500°C.

Es entweichen aus dem Vorwärmer im Laufe der Vorwärmung und aus dem Reaktor im Laufe der Oxidation Gase, in denen Schwermetallverbindungen enthalten sind, wie es im vorangehenden schon beschrieben wurde. Diese Gase werden gereinigt, um die Schwermetalle wiederzugewinnen, gegebenenfalls die Schwefel- und/oder Halogenverbindungen zu binden, und der Umluft nur unbedenkliche Inertgase abzugeben. Entsprechende Gasreinigungsverfahren sind an sich bekannt und werden deshalb hier nicht näher beschrieben.

Beim nächsten Verfahrensschritt, der im wesentlichen bei der gleichen Temperatur ausgeführt wird wie der vorangehende Oxidationsschritt, wird der Inhalt des Reaktors reduziert, und zwar soweit, dass zumindest alle Metalle, die edler sind als Eisen, aus deren Oxidform zu Metall übergeführt werden, und auch die Eisenverbindungen zumindest teilweise reduziert werden. Solche verbleibende Metalle sind, ausser Eisen selbst, beispielsweise Kupfer, Nickel.

Bei diesem Reduktionsschritt wird als Reduktionsmittel in erster Linie das bereits erwähnte, vom Kehrichtverbrennungsrückstand getrennte Schrotteisen und in zweiter Linie das bereits erwähnte zusätzliche Eisen verwendet. Zusätzliche Reduktionsmittel könnten verwendet werden, insbesondere eine Teilfraktion des Kehrichtverbrennungsproduktes.

Im Laufe dieser Reduktion wird in der Schmelze Eisen abgeschieden, das sich darunter als Eisenbad ansammelt. In diesem Eisenbad sammelt sich im wesentlichen die Gesamtheit aller verbleibenden Metalle in Form einer Legierung davon mit dem Eisen. Geschmolzenes Eisen bzw. die geschmolzene Legierung sind in der überstehenden geschmolzenen Schlacke nicht löslich, so dass sich das Eisen bzw. die Legierung ohne weiteres durch Sedimentation von der geschmolzenen Schlacke trennt, es bzw. sie absinkt und sich dann am unteren Teil des Reaktors ansammelt.

Gegebenenfalls können dem Reaktor wie bereits erwähnt Extraktionsmittel ("Sammler") wie vor allem Blei und dann Eisen, Kupfer und dergleichen eingegeben werden, um die erwähnte Sedimentation zu beschleunigen. Gegebenenfalls können dem Reaktor verschiedene Extraktionsmittel nacheinander eingegeben werden, um die entstehenden reduzierten Metalle auf Basis ihres Redoxpotentials entstehen zu lassen und fraktioniert zu erhalten.

Im Falle eines hohen Chromgehalts in den als Ausgangsstoff verwendeten Kehrichtverbrennungsrückständen kann, zusätzlich zur vorangehend angegebenen Behandlung mit Chlor bei der Oxidation der Schmelze, bei der Reduktion der Schmelze eine Nachbehandlung durch Beigabe von metallischem Aluminium und/oder Calcium und/oder Ferrosilicium vorgenommen werden, um auch dieses Chrom zu reduzieren und in die geschmolzene Legierung überzuführen. Diese Nachbehandlung ist auch eine Reduktion und daher in Fig. 1 im Reduktionsschritt subsumiert.

Das Eisenbad, d.h. das geschmolzene Eisen bzw. die geschmolzene Legierung, kann aus dem Reaktor abgezogen werden.

Wenn dem Reaktor verschiedene Metalle wie erwähnt zugesetzt worden sind, können die auf Basis der unterschiedlichen Redoxpotentiale dieser Metalle nacheinander und gegebenenfalls in mehreren Schichten sedimentierten Metallbäder nacheinander aus dem Reaktor abgezogen werden, um entsprechende Metallfraktionen zu ergeben.

Bei dem in Fig. 2 ein als Beispiel eines Reaktors dargestellten, mit elektrischem Lichtbogen geheizten Konverter kann dieser gekippt werden, um zunächst die geschmolzene Schlacke und danach die geschmolzene Legierung auszuschütten. Wird nicht jedesmal, d.h. nach Behandlung jeder Charge von Kehrichtverbrennungsrückständen im Reaktor, die geschmolzene Legierung abgezogen, sondern jedesmal nur die behandelte geschmolzene Schlacke, so sammelt sich allmählich am unteren Teil des Reaktors eine an Schwermetallen hochangereicherte Eisenlegierung an, in der die anfänglich in der Schmelze enthaltenen Metalle, unter anderem Eisen, Kupfer, Nickel, enthalten sind, und die auf wirtschaftlich interessante Weise weiterverarbeitbar ist, um diese Metalle wiederzugewinnen.

Die im geschmolzenen Zustand dem Reaktor entnommene Schlacke wird abgeschreckt und granuliert. Sie hat latenthydraulische und/oder puzzolanische Eigenschaften sowie einen genügend tiefen Schadstoffgehalt, um der in der Schweiz geltenden "Technischen Verordnung über Abfälle" zu genügen. Ihre Verwendung ist im Hinblick auf die Umwelt unbedenklich. Als Fluid zur Abschreckung dieser Schlacke kann ein Gemisch von Frischluft und Feuchtluft aus der Vorwärmung verwendet werden, wie es bereits vorangehend angegeben wurde und in Fig. 1 dargestellt ist. Die Abschreckung und Granulierung der Schlackenschmelze dient als Vorstufe bei der Verarbeitung der Kehrichtverbrennungsrückstände zu einem hochwertigen mineralischen Bindemittel von tiefem Schadstoffgehalt, das beispielsweise für Mischzemente verwendbar ist und dem Zement und/oder Beton ohne weiteres bei einer beliebigen Anwendung beigemischt werden kann.

Kurz zusammengefasst produziert das erfindungsgemässe Verfahren drei Phasen:

- eine Gasphase mit unter anderem den flüchtigen ("atmosphilen") Metallen, Schwefel- und Halogenverbindungen;
- eine im Hinblick auf die Umwelt unbedenkliche Schlacke mit latenthydraulischen und/oder puzzolanischen Eigenschaften; und
- eine gegebenenfalls eisenhaltige Metallphase mit den nicht flüchtigen Metallen, gegebenenfalls als separate Fraktionen von einzelnen Metallen.

Beim Betrieb eines Konverters als Reaktor für das beschriebene Verfahren lassen sich fünf aufeinanderfolgende Verfahrensschritte unterscheiden:

- Laden der Kehrichtverbrennungsrückstände in den Vorwärmer und Vorwärmung;
- Oxidation der Kehrichtverbrennungsrückstände unter Schaffung einer Schmelze;
- Reduktion der Schmelze und gegebenenfalls Nachbehandlung zur Reduktion des Chroms;
- Aggregation der Tropfen der Metallphase und deren Abscheidung im unteren Teil des Konverters, gegebenenfalls in aufeinanderfolgenden Fraktionen; und

- getrennte Entnahme der behandelten Schlacke und der Metallphase aus dem Konverter, Verarbeitung der Schlacke zu mineralischem Bindemittel, Aufbereitung der Metallphase, Rückgewinnung der Wärme.

In Fig. 2 ist der erwähnte, mit elektrischem Lichtbogen heizbare Konverter im Längsschnitt in der Position dargestellt, bei der ein Gas in die Schmelze eingeblasen werden kann, wobei es sich bei gleicher zeichnerischer Darstellung um den Verfahrensschritt der Oxidation oder Reduktion der Schmelze gemäss der vorangehenden Aufstellung von Verfahrensschritten handeln kann. Die Elektroden für den elektrischen Lichtbogen sind in Fig. 2 nicht dargestellt, da sie beim dargestellten Verfahrensschritt aus dem Konverter herausgezogen und entfernt sind.

Der Konverter 1 ist über ein System von Rollen 2 am Boden abgestützt und kippbar gelagert. Im Konverter 1 ist eine gesamthaft mit 3 bezeichnete Schmelze enthalten, die aus zwei Phasen besteht: gemäss dem vorangehend beschriebenen Verfahren hat sich im unteren Teil des Konverters 1 als schwerere Phase ein geschmolzenes eisenhaltiges Metallbad 4 angesammelt, dem als leichtere Phase eine Schicht 5 aus geschmolzener Schlacke übersteht. Zwischen dem Metallbad 4 und der Schicht 5 bildet sich dabei eine Grenzfläche 6. In diese als flüssiges Zweiphasensystem vorliegende Schmelze 3 kann ein durch die Leitung 7 zugeführtes Gas über ein System von Rohren 8 eingeblasen werden. Zur besseren Veranschaulichung des flüssigen Zweiphasensystems wird in Fig. 2 ein Ruhezustand dargestellt, bei dem kein Gas eingeblasen wird und sich in der Schmelze 3 die beiden Phasen 4 und 5 voneinander trennen und unter Bildung der Grenzfläche 6 übereinander schichten können. Wird hingegen Gas in die Schmelze 3 über das System von Rohren 8 eingeblasen, so wird die Schmelze 3 derart verwirbelt, dass sie als Dispersion vorliegt und somit keine getrennten Phasen 4 und 5 vorliegen und darstellbar sind.

Aus Fig. 2 ist erkennbar, dass durch allmähliches Kippen des Konverters 1 zuerst die überstehende Schicht 5 aus geschmolzener Schlacke und danach, falls gewünscht, auch das Metallbad 4 durch eine Mündung 9 des Konverters 1 entnehmbar sind, beispielsweise durch Schütten in eine geeignete Pfanne für den Transport oder in ein geeignetes Rohr für die direkte Zuleitung zur weiteren Aufbereitung. Auf diese Weise können die überstehende Schicht 5 und das Metallbad 4 voneinander getrennt werden, um separat weiter aufbereitet zu werden.

Die Vorrichtungen zum Auffangen der Gase an der Mündung 9 des Konverters 1 sind an sich bekannt und deshalb nicht dargestellt.

Es ist noch zu verstehen, dass andere Ausbildungen eines Reaktors zur Durchführung des erfindungsgemässen Verfahrens möglich sind, beispielsweise TBR-Konverter, Kurztrommelöfen, LD-Tiegel, sogenannte KIVCET-Bleiverhüttungsöfen und andere Konverter analog den Siemens-Martin-Öfen, wie sie von Stahlwerken her bekannt sind, sowie beispielsweise auch Glasschmelzwannen und dergleichen.

## Patentansprüche

1. Verfahren zur Aufbereitung von grösstenteils anorganischen, mit Schwermetallen und/oder Schwermetallverbindungen belasteten Kehrichtverbrennungsprodukten und/oder Analoga davon zu umweltverträglichen Produkten durch Schmelzen und schmelzthermische Behandlung dieser Kehrichtverbrennungsprodukte und/oder Analoga in einem Reaktor gegebenenfalls nach deren Trocknung und/oder Vorheizung, wobei

   - eine Schmelze dieser Kehrichtverbrennungsprodukte im Reaktor bereitgestellt wird, welche Metalle bzw. Metallverbindungen - einschliesslich Schwermetallen und Eisen - umfasst,
   - flüchtige Metalle und Metallverbindungen in einer Gasphase entweichen und anschliessend daraus abgeschieden und/oder ausgewaschen werden,
   - Verbindungen von metallischen Elementen reduziert werden, bis zumindest alle metallischen Elemente, die edler sind als Eisen, aus deren Oxidform zu Metall übergeführt werden,
   - Eisen und in Eisen lösliche Metalle im Reaktor in einer Eisenschmelze gesammelt werden,
   - Elemente und Verbindungen, die in Eisen nicht löslich sind, im Reaktor in einer Schlackenschmelze über der Eisenschmelze und/oder in mindestens einer Schwermetallschmelze unter der Eisenschmelze gesammelt und anschliessend von der Eisenschmelze abgeschieden werden, und
   - die dem Reaktor entnommene Schlackenschmelze abgeschreckt wird, um puzzolanische oder hydraulische Reaktionseigenschaften zu erhalten,
   - die gesamte im Reaktor enthaltene Schmelze vor der Reduktion zunächst einer Oxidation unter starker Verwirbelung durch Einblasen von einem Sauerstoff und/oder Sauerstoffverbindungen enthaltenden Gas unterzogen wird, bis von der im Reaktor vorhandenen Metallen und Metallverbindungen, zumindest das gesamte Eisen in die Oxidform übergeführt sind,

   **dadurch gekennzeichnet, dass**
   beim Reduktionsschritt als Reduktionsmittel metallisches Eisen verwendet wird.

2. Verfahren nach Anspruch 1, **dadurch gekennzeichnet, dass** beim Oxidationsschritt der Gehalt der im Reaktor enthaltenen Schmelze an Eisen durch Beigabe von Eisen oder einer Eisenverbindung eingestellt wird.

3. Verfahren nach Anspruch 1, **dadurch gekennzeichnet, dass** die Temperatur der im Reaktor enthaltenen Schmelze zumindest am Ende der Oxidation oberhalb 1450°C gehalten wird.

4. Verfahren nach Anspruch 3, **dadurch gekennzeichnet, dass** die Temperatur der im Reaktor enthaltenen Schmelze zumindest am Ende der Oxidation bei etwa 1500°C gehalten wird.

5. Verfahren nach Anspruch 1, **dadurch gekennzeichnet, dass** bei dem auf den Oxidationsschritt folgenden Reduktionsschritt auch Eisenoxid zumindest teilweise zu Metall übergeführt wird.

6. Verfahren nach Anspruch 1, **dadurch gekennzeichnet, dass** dem Reaktor bei dem auf den Oxidationsschritt folgenden Reduktionsschritt Extraktionsmittel zur gesteuert fraktionierten Extraktion einzelner Metalle und zur Sedimentation eines die Schwermetallschmelze(n) unter der Eisenschmelze schichtweise enthaltenden Metallbades eingegeben werden.

7. Verfahren nach Anspruch 6, **dadurch gekennzeichnet, dass** das Metallbad fraktioniert dem Reaktor entnommen wird.

8. Verfahren nach Anspruch 1, **dadurch gekennzeichnet, dass** beim Reduktionsschritt die Reduktion mittels Eisen in Form von Schrott, erfolgt.

9. Verfahren nach Anspruch 1, **dadurch gekennzeichnet, dass** beim Reduktionsschritt die Reduktion mittels einer Teilfraktion des Kehrichtverbrennungsproduktes erfolgt.

10. Verfahren nach einem oder mehreren der Ansprüche 8 und 9, **dadurch gekennzeichnet, dass** anschliessend an den genannten Reduktionsschritt mittels Eisen und/oder einer Teilfraktion des Kehrichtverbrennungsproduktes eine reduzierende Nachbehandlung mittels Beigabe von Aluminium und/oder Calcium und/oder Ferrosilicium vorgenommen wird.

11. Verfahren nach Anspruch 1, **dadurch gekennzeichnet, dass** die Abschreckung der Schlackenschmelze durch Wärmeaustausch mit einem Fluid, vorzugsweise mit Wasser, Wasserdampf, Luft und/oder Sauerstoff erfolgt und das bei diesem Wärmeaustausch erhitzte Fluid zur Vorwärmung von noch nicht geschmolzenen Kehrichtverbrennungsprodukten und/oder Analoga verwendet wird.

12. Verfahren nach Anspruch 11, **dadurch gekennzeichnet, dass** zur genannten Abschreckung ein bereits zur genannten Vorwärmung verwendetes Fluid verwendet wird.

**Claims**

1. Process for treating mainly inorganic waste incineration products and/or analogues thereof which are polluted with heavy metals and/or heavy metal compounds to form environmentally compatible products by melting and thermal melt treatment of these waste incineration products and/or analogues in a reactor, if appropriate after their drying and/or preheating,

   • a melt of these waste incineration products being prepared in the reactor, which melt comprises metals and/or metal compounds - including heavy metals and iron,
   • volatile metals and metal compounds escaping in a gas phase and then being separated off and/or scrubbed out therefrom
   • compounds of metal elements being reduced until all metal elements which are nobler than iron are converted from their oxide form to the metal,
   • iron and iron-soluble metals being collected in an iron melt in the reactor,
   • elements and compounds which are not iron-soluble being collected in the reactor in a slag melt over the iron melt and/or in at least one heavy metal melt below the iron melt and then being separated from the iron melt and
   • the slag melt withdrawn from the reactor being quenched in order to obtain puzzolanic or hydraulic reaction properties,
   • all of the melt present in the reactor, prior to the reduction, being first subjected to an oxidation, under strong

EP 0 572 769 B1

turbulence, by injecting an oxygen- and/or oxygen-compound-containing gas, until, of the metals and metal compounds present in the reactor, at least all of the iron is converted into the oxide form, characterized in that, in the reduction step, the reducing agent used is metallic iron.

2. Process according to Claim 1, characterized in that, in the oxidation step, the iron content of the melt present in the reactor is set by adding iron or an iron compound.

3. Process according to Claim 1, characterized in that the temperature of the melt present in the reactor is kept above 1450°C at least at the end of the oxidation.

4. Process according to Claim 3, characterized in that the temperature of the melt present in the reactor is kept at about 1500°C at least at the end of the oxidation.

5. Process according to Claim 1, characterized in that, in the reduction step following the oxidation step, iron oxide is also at least partially converted to metal.

6. Process according to Claim 1, characterized in that, in the reduction step following the oxidation step, extraction medium is introduced into the reactor for the fractional extraction under controlled conditions of individual metals and for the sedimentation of a metal bath containing the heavy metal melt(s) in layers below the iron melt.

7. Process according to Claim 6, characterized in that the metal bath is taken off from the reactor in fractions.

8. Process according to Claim 1, characterized in that, in the reduction step, the reduction is performed using iron in the form of scrap.

9. Process according to Claim 1, characterized in that, in the reduction step, the reduction is carried out using a partial fraction of the waste incineration product.

10. Process according to one or more of Claims 8 and 9, characterized in that, subsequently to the said reduction step using iron and/or a partial fraction of the waste incineration product, a reductive post-treatment is carried out by adding aluminium and/or calcium and/or ferrosilicum.

11. Process according to Claim 1, characterized in that the slag melt is quenched by heat exchange with a fluid, preferably with water, steam, air and/or oxygen and the fluid heated in this heat exchange is used to preheat as yet non-molten waste incineration products and/or analogues.

12. Process according to Claim 11, characterized in that, for the said quenching, use is made of fluid already used for the said preheating.

**Revendications**

1. Procédé pour le traitement de produits d'incinération d'ordures ménagères et/ou analogues, pour la majeure partie de type inorganique, pollués avec des métaux lourds et/ou avec des composés de métaux lourds, pour obtenir des produits non polluants par mise en fusion et par traitement thermique en fusion de ces produits d'incinération d'ordures ménagères et/ou analogues dans un réacteur, le cas échéant après leur séchage et/ou leur réchauffement préalable, dans lequel

-   on prépare une masse fondue de ces produits d'incinération d'ordures ménagères dans le réacteur, qui comprend des métaux, respectivement des composés métalliques, y compris des métaux lourds et du fer,
-   on fait en sorte que les métaux et les composés métalliques volatils se dégagent en phase gazeuse à partir de laquelle ils sont ensuite soumis à une précipitation et/ou à une élimination par lavage,
-   on réduit des composés d'éléments métalliques jusqu'à ce qu'au moins tous les éléments métalliques, qui sont plus nobles que le fer, aient été transformés en métal à partir de leur forme oxydée,
-   on rassemble dans le réacteur le fer et les métaux dissous dans le fer en une masse fondue contenant du fer,
-   on rassemble dans le réacteur les éléments et les composés qui ne sont pas solubles dans le fer en une masse fondue de scories disposée par-dessus la masse fondue contenant du fer et/ou en au moins une masse fondue contenant des métaux lourds disposée en dessous de la masse fondue contenant du fer, puis on les sépare de la masse fondue contenant du fer, par précipitation, et

11

- on trempe la masse fondue de scories prélevée du réacteur pour obtenir des propriétés réactionnelles de type pouzzolanique ou de type hydraulique,
- on soumet la masse fondue totale contenue dans le réacteur, avant la réduction, d'abord à une oxydation dans des conditions de tourbillonnement intense par insufflation d'un gaz contenant de l'oxygène et/ou des composés oxygénés, jusqu'à ce que, à partir des métaux et des composés métalliques présents dans le réacteur, au moins le fer total a été transformé en forme oxydée,

caractérisé en ce qu'on utilise, dans l'étape de réduction, à titre d'agent réducteur, du fer métallique.

2. Procédé selon la revendication 1, caractérisé en ce qu'on règle, lors de l'étape d'oxydation, la teneur de la masse fondue en fer contenue dans le réacteur, par addition d'une quantité supplémentaire de fer ou d'un composé du fer.

3. Procédé selon la revendication 1, caractérisé en ce qu'on maintient la température de la masse fondue contenue dans le réacteur au moins jusqu'au terme de l'oxydation à une valeur supérieure à 1450°C.

4. Procédé selon la revendication 3, caractérisé en ce qu'on maintient la température de la masse fondue contenue dans le réacteur au moins jusqu'au terme de l'oxydation à une valeur d'environ 1500°C.

5. Procédé selon la revendication 1, caractérisé en ce que, au cours de l'étape de réduction faisant suite à l'étape d'oxydation, on transforme également l'oxyde de fer au moins en partie en métal.

6. Procédé selon la revendication 1, caractérisé en ce qu'on introduit dans le réacteur, au cours de l'étape de réduction faisant suite à l'étape d'oxydation, des agents d'extraction dans le but d'accélérer l'extraction fractionnée des métaux individuels et à des fins de sédimentation d'un bain métallique contenant la ou les masses fondues de métaux lourds sous la forme d'une couche disposée en dessous de la masse fondue contenant du fer.

7. Procédé selon la revendication 6, caractérisé en ce qu'on prélève le bain métallique du réacteur à l'état fractionné.

8. Procédé selon la revendication 1, caractérisé en ce que la réduction, au cours de l'étape de réduction, a lieu à l'aide de fer sous forme de riblons.

9. Procédé selon la revendication 1, caractérisé en ce que la réduction, au cours de l'étape de réduction, a lieu à l'aide d'une fraction partielle du produit d'incinération d'ordures ménagères.

10. Procédé selon une ou plusieurs des revendications 8 et 9, caractérisé en ce qu'on procède, suite à l'étape de réduction mentionnée, à l'aide de fer et/ou d'une fraction partielle du produit d'incinération d'ordures ménagères, à un traitement ultérieur de réduction en ajoutant une quantité supplémentaire d'aluminium et/ou de calcium et/ou de ferrosilicium.

11. Procédé selon la revendication 1, caractérisé en ce que la trempe de la masse fondue contenant des scories a lieu par échange thermique avec un fluide, de préférence avec de l'eau, avec de la vapeur d'eau, avec de l'air et/ou avec de l'oxygène, et on utilise le fluide chauffé au cours de cet échange thermique pour le réchauffement préalable de produits d'incineration d'ordures ménagères et/ou analogues qui n'ont pas encore été portés à fusion.

12. Procédé selon la revendication 11, caractérisé en ce qu'on utilise, pour la trempe mentionnée, un fluide déjà utilisé pour le réchauffement préalable mentionné.

FIG. 1

Verarbeitung zu Mischzement

Legende:

| | |
|---|---|
| ☐ (Verfahrensschritt Symbol) | Verfahrensschritt |
| ☐ (Edukt Symbol) | Edukt, Produkt |
| - - - - - - | Gas, Fluid |
| ———— | Feststoff-, Schmelzefluss |

13

FIG. 2